# EUROPEAN PATENT APPLICATION

(11) **EP 4 641 877 A1**
(43) Date of publication of application: **29.10.2025**
(21) Application number: 24209319.3
(22) Date of filing: 28.10.2024
(51) Int. Cl.: H02J 7/00, H02J 9/06, H02M 1/36, H02M 5/458, H02M 7/487

(54) **UNINTERRUPTIBLE POWER SUPPLY, METHOD AND APPARATUS FOR SOFT STARTING THE UNINTERRUPTIBLE POWER SUPPLY, AND CONTROLLER**

(30) Priority: 22.04.2024 CN 202410488595
(71) Applicant: Vertiv Tech Co., Ltd., Guangdong 518055 (CN)
(72) Inventor: XU, Wei, Shenzhen, 518055 (CN); CHEN, Peng, Shenzhen, 518055 (CN)
(74) Representative: Morrall, Jonathan Ian McLachlan

(57) **Abstract**

Provided in the present disclosure are an uninterruptible power supply, a method and an apparatus for soft starting the uninterruptible power supply, and a controller. In the uninterruptible power supply, an inverter circuit is provided with three-phase output terminals, and two output terminals of the pre-charge circuit are electrically connected to output terminals of any two phases of the inverter circuit, respectively, rather than directly connected to a direct-current bus. When the uninterruptible power supply charges a bus capacitor with the pre-charge circuit, the bus capacitor can be charged through an energy storage operation and a freewheeling operation of the inverter circuit, so that a voltage of the bus capacitor is greater than a peak value of a mains power. When the mains relay is powered on, a voltage of an end of the mains relay that is electrically connected to the mains power is lower than the voltage of the bus capacitor. Due to the limitation of a conduction direction of a rectification device in a rectification circuit, no inrush current occurs. Hence, arcing of relay contacts caused by the inrush current is reduced, and thereby the stability of the uninterruptible power supply during a power-on process is improved.

## Description

The present application claims priority to Chinese Patent Application No. 202410488595.3, titled "UNINTERRUPTIBLE POWER SUPPLY AND SOFT STARTING METHOD AND APPARATUS THEREOF, CONTROLLER", filed on April 22, 2024 with the China National Intellectual Property Administration, which is incorporated herein by reference in its entirety.

### TECHNICAL FIELD

The present application relates to the field of uninterruptible power supplies, and in particular to an uninterruptible power supply, a method and an apparatus for soft starting the uninterruptible power supply, and a controller.

### BACKGROUND

An uninterruptible power supply (UPS) is a device in a data center that supplies stable power for post-stage equipment. The UPS includes a mains relay, a pre-charge circuit, a rectification circuit, a bus capacitor, and an inverter circuit. The pre-charge circuit is electrically connected between a mains power and the bus capacitor, and includes an uncontrollable three-phase bridge circuit, a pre-charge circuit relay, a current-limiting resistor, and a filtering capacitor.

After the UPS having been started, the bus capacitor is pre-charged through uncontrolled rectification of the pre-charge circuit. The mains relay is controlled to be turned on when a voltage difference between a voltage of the bus capacitor and a mains voltage is within a preset voltage difference range, so that the rectification circuit charges the bus capacitor. Due to the voltage division of the current-limiting resistor in the pre-charge circuit, an absolute value of a first voltage difference between a peak voltage of the mains power and a voltage of a neutral line is greater than an absolute value of a second voltage difference between a bus voltage and the voltage of the neutral line. Therefore, a large inrush current occurs when the mains relay is closed, causing arcing of relay contacts and increasing a failure rate of the mains relay, and thus affecting the reliability of the uninterruptible power supply.

Therefore, how to improve a stability of the uninterruptible power supply during the power-on process becomes a focus in researches.

### SUMMARY

An uninterruptible power supply, a method and an apparatus for soft starting the uninterruptible power supply, and a controller are provided according to the present disclosure to solve the above technical problems.

In a first aspect, an uninterruptible power supply is provided according to the present disclosure. The uninterruptible power supply includes: a rectification circuit, a pre-charge circuit, an inverter circuit, a first bus capacitor, a second bus capacitor, and a mains relay.

Three-phase mains input terminals of the rectification circuit are electrically connected to three input terminals of the pre-charge circuit through the mains relay respectively, a positive output terminal of the rectification circuit is electrically connected to a positive input terminal of the inverter circuit through a positive direct-current bus, and a negative output terminal of the rectification circuit is electrically connected to a negative input terminal of the inverter circuit through a negative direct-current bus, the first bus capacitor and the second bus capacitor are electrically connected in series between the positive direct-current bus and the negative direct-current bus, and a connection point between the first bus capacitor and the second bus capacitor is electrically connected to a neutral line.

The inverter circuit is provided with three-phase output terminals, and a positive output terminal and a negative output terminal of the pre-charge circuit are electrically connected to any two phases of the output terminal of the inverter circuit.

According to the above technical solution, in the uninterruptible power supply, the two output terminals of the pre-charge circuit are electrically connected to any two phases of the output terminal of the inverter circuit, rather than directly connected to the direct-current bus. When the uninterruptible power supply charges the bus capacitor with the pre-charge circuit, the bus capacitor can be charged through the energy storage operation and the freewheeling operation of the inverter circuit, so that the voltage of the bus capacitor is greater than the peak value of the mains power. When the mains relay is powered on, the voltage of the end of the mains relay that is connected to the mains power is lower than the voltage of the bus capacitor. Due to the limitation of a conduction direction of a rectification device in the rectification circuit, no inrush current occurs. Hence, arcing of relay contact caused by the inrush current is reduced, and thereby a stability of the uninterruptible power supply during a power-on process is improved.

In an embodiment, the inverter circuit includes at least one inverter unit, the inverter unit includes a three-phase three-level inverter circuit, the three-phase three-level inverter circuit includes three single-phase three-level inverter circuits, each of the single-phase three-level inverter circuits includes a first switch module, a second switch module, a midpoint freewheeling module, and an energy storage module.

In the single-phase three-level inverter circuit, a first end of the first switch module is electrically connected to the positive input terminal of the inverter circuit, a second end of the second switch module is electrically connected to the negative input terminal of the inverter circuit, a second end of the first switch module and a first end of the second switch module are electrically connected to the midpoint freewheeling module, a first end of the midpoint freewheeling module is electrically connected to an output terminal of a respective phase of the inverter unit through the energy storage module, and a second end of the midpoint freewheeling module is electrically connected to the neutral line.

In an embodiment, the three-level inverter circuit is a T-type three-level inverter circuit, and the second end of the first switch module and the first end of the second switch module are electrically connected to the first end of the midpoint freewheeling module.

In a case where the inverter circuit operates for energy storage, a first conduction current path of a midpoint freewheeling module coupled to the positive output terminal of the pre-charge circuit is from a first end to a second end of the midpoint freewheeling module, and a first conduction current path of a midpoint freewheeling module coupled to the negative output terminal of the pre-charge circuit is from a second end to a first end of the midpoint freewheeling module.

In a case where the inverter circuit operates for freewheeling, all the midpoint freewheeling modules are turned off.

In an embodiment, the midpoint freewheeling module includes a first controllable switch device and a second controllable switch device.

A first end of the first controllable switch device serves as the first end of the midpoint freewheeling module.

A second end of the first controllable switch device is electrically connected to a second end of the second controllable switch device.

A first end of the second controllable switch device serves as the second end of the midpoint freewheeling module.

In an embodiment, the three-level inverter circuit is an I-type three-level inverter circuit, the second end of the first switch module is electrically connected to a third end of the midpoint freewheeling module, and the first end of the second switch module is electrically connected to a fourth end of the midpoint freewheeling module.

In a case where the inverter circuit operates for energy storage, a first conduction current path of a midpoint freewheeling module coupled to the positive output terminal of the pre-charge circuit passes through the first end of the midpoint freewheeling module, the fourth end of the midpoint freewheeling module, and the second end of the midpoint freewheeling module, sequentially, and a first conduction current path of a midpoint freewheeling module coupled to the negative output terminal of the pre-charge circuit passes through the second end of the midpoint freewheeling module, the third end of the midpoint freewheeling module, and the first end of the midpoint freewheeling module, sequentially.

In a case where the inverter circuit operates for freewheeling, a second conduction current path of a midpoint freewheeling module coupled to the positive output terminal of the pre-charge circuit is from the first end to the third end of the midpoint freewheeling module, and a second conduction current path of a midpoint freewheeling module coupled to the negative output terminal of the pre-charge circuit is from the fourth end to the first end of the midpoint freewheeling module.

In an embodiment, the midpoint freewheeling module includes a first controllable switch device, a second controllable switch device, a first energy storage diode, and a second energy storage diode.

A first end of the first controllable switch device and a second end of the second controllable switch device are electrically connected to serve as the first end of the midpoint freewheeling module.

A second end of the first controllable switch device and a first end of the first energy storage diode are electrically connected to serve as the fourth end of the midpoint freewheeling module.

A second end of the first energy storage diode and a first end of the second energy storage diode are electrically connected to serve as the second end of the midpoint freewheeling module.

A first end of the second controllable switch device and a second end of the second energy storage diode are electrically connected to serve as the third end of the midpoint freewheeling module.

In a second aspect, a method for soft starting an uninterruptible power supply is provided according to the present disclosure. The method is applied to the uninterruptible power supply according to any of the embodiments in the first aspect. The method includes:
controlling a pre-charge circuit to be turned on;
controlling an inverter circuit to alternately perform an energy storage operation and a freewheeling operation;
acquiring a first voltage difference between a voltage of a positive direct-current bus and a voltage of a neutral line, and a second voltage difference between a voltage of a negative direct-current bus and a voltage of the neutral line; and
controlling to a mains relay to be closed in a case that the first voltage difference is greater than a first preset voltage difference and an absolute value of the second voltage difference is greater than the first preset voltage difference; and
where the first preset voltage difference is greater than or equal to an absolute value of a difference between a peak voltage of a mains power and a voltage of the neutral line.

In an embodiment, the inverter circuit includes at least one inverter unit, the inverter unit includes three single-phase three-level inverter circuits, each single-phase three-level inverter circuit includes a first switch module, a second switch module, and a midpoint freewheeling module, a second end of the first switch module, a first end of the second switch module and a first end of the midpoint freewheeling module are electrically connected to a phases of an output terminal of the inverter unit, respectively, and a second end of the inverter circuit is electrically connected to the neutral line.

The midpoint freewheeling module includes a first controllable switch device and a second controllable switch device, the first controllable switch device is in a first conduction current path of a midpoint freewheeling module coupled to a positive output terminal of the pre-charge circuit, and the second controllable switch device is in a first conduction current path of a midpoint freewheeling module coupled to a negative output terminal of the pre-charge circuit; the first conduction current path of the midpoint freewheeling module coupled to the positive output terminal of the pre-charge circuit is from a first end to a second end of the midpoint freewheeling module, and the first conduction current path of the midpoint freewheeling module coupled to the negative output terminal of the pre-charge circuit is from the second end to the first end of the midpoint freewheeling module.

The controlling an inverter circuit to perform an energy storage operation includes:
controlling the first controllable switch device and the second controllable switch device to be turned on;
controlling the other switch devices in the inverter circuit to be turned off.

In an embodiment, the controlling an inverter circuit to perform a freewheeling operation includes:
controlling all switch devices in the inverter circuit to be turned off.

In an embodiment, after the controlling to close a mains relay, the method further includes:
controlling the pre-charge circuit to be turned off.

In a third aspect, an apparatus for soft starting an uninterruptible power supply is provided according to the present disclosure. The apparatus includes:
a processing module, configured to control a pre-charge circuit to be turned on and control an inverter circuit to alternately perform an energy storage operation and a freewheeling operation;
an acquisition module, configured to acquire a first voltage difference between a voltage of a positive direct-current bus and a voltage of a neutral line, and a second voltage difference between a voltage of a negative direct-current bus and a voltage of the neutral line;
where the processing module is further configured to control a mains relay to be closed in a case that the first voltage difference is greater than a first preset voltage difference and an absolute value of the second voltage difference is greater than the first preset voltage difference; and
where the first preset voltage difference is greater than or equal to an absolute value of a difference between a peak voltage of a mains power and a voltage of the neutral line.

In a fourth aspect, a controller is provided according to the present disclosure. The controller includes a processor and a memory communicatively connected with the processor.

The memory stores computer executable instructions.

The processor, when executing the computer executable instructions, is configured to implement the method according to any of the embodiments in the second aspect.

An uninterruptible power supply, a method and an apparatus for soft starting the uninterruptible power supply, and a controller are provided according to the present disclosure. In the uninterruptible power supply, the inverter circuit is provided with three-phase output terminals, and two output terminals of the pre-charge circuit are electrically connected to any two phases of the output terminals of the inverter circuit respectively, rather than directly connected to the direct-current bus. When the uninterruptible power supply charges the bus capacitor with the pre-charge circuit, the bus capacitor can be charged through the energy storage operation and freewheeling operation of the inverter circuit, so that the voltage of the bus capacitor is greater than the peak value of the mains power. When the mains relay is powered on, the voltage of the end of the mains relay that is electrically connected to the mains power is lower than the voltage of the bus capacitor. Due to the limitation of a conduction direction of a rectification device in the rectification circuit, no inrush current occurs. Hence, arcing of relay contacts caused by the inrush current is reduced, and thereby a stability of the uninterruptible power supply during the power-on process is improved.

### BRIEF DESCRIPTION OF THE DRAWINGS

The accompanying drawings, which are incorporated into and constitute a part of the specification, illustrate embodiments in accordance with the present disclosure and are used to explain the principles of the present disclosure together with the specification.
Figure 1 is a schematic structural diagram of an uninterruptible power supply according to an exemplary embodiment of the present disclosure;
Figure 2 is a schematic structural diagram of an uninterruptible power supply according to another exemplary embodiment of the present disclosure;
Figure 3A is a schematic structural diagram of an inverter unit according to an exemplary embodiment of the present disclosure;
Figure 3B is a schematic structural diagram of an inverter unit according to another exemplary embodiment of the present disclosure;
Figure 3C is a schematic structural diagram of an inverter unit according to another exemplary embodiment of the present disclosure;
Figure 4A is a schematic diagram showing energy storage of a T-type three-level inverter circuit according to an exemplary embodiment of the present disclosure;
Figure 4B is a schematic diagram showing freewheeling of a T-type three-level inverter circuit according to an exemplary embodiment of the present disclosure;
Figure 5A is a schematic diagram showing energy storage of a I-type three-level inverter circuit according to an exemplary embodiment of the present disclosure;
Figure 5B is a schematic diagram showing freewheeling of a I-type three-level inverter circuit according to an exemplary embodiment of the present disclosure;
Figure 6 is a schematic flowchart of a method for soft starting an uninterruptible power supply according to an exemplary embodiment of the present disclosure;
Figure 7 is a schematic structural diagram of an apparatus for soft starting an uninterruptible power supply according to an exemplary embodiment of the present disclosure; and
Figure 8 is a schematic structural diagram of a controller according to an exemplary embodiment of the present disclosure.

Through the above-mentioned drawings, specific embodiments of the present application have been shown, which are described in more detail hereinafter. These drawings and text descriptions are not intended to limit the scope of the idea of the present disclosure in any way, but to illustrate the concept of the present disclosure to those skilled in the art by referring to specific embodiments.

### DETAILED DESCRIPTION OF THE EMBODIMENTS

Exemplary embodiments are described herein in detail, and examples of the embodiments are shown in the accompanying drawings. When the following descriptions are made with reference to the drawings, unless indicated otherwise, same reference numbers in different drawings represent the same or similar elements. The implementations described in the following exemplary embodiments do not represent all implementations consistent with the present application. Instead, the described implementations are merely examples of apparatuses and methods consistent with aspects of the present application as recited in the appended claims.

A data center, commonly known as a machine room, includes a computer system, a communication system, a storage system, an environmental control device, a monitoring device, and various security apparatuses. A stable power supply for the data center is a prerequisite to ensure stable operation of the data center. Therefore, the data center is generally provided with an uninterruptible power supply, which is connected between the mains power and power consumer equipment in the data center, to supply stable and continuous power to the power consumer equipment.

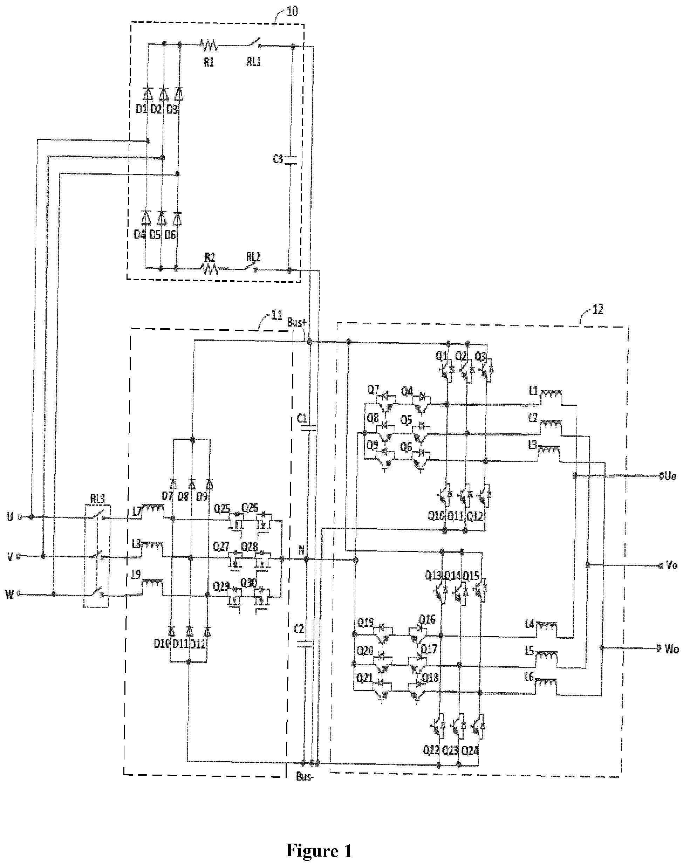

Figure 1 is a schematic structural diagram of a circuit of an uninterruptible power supply in the related art according to an exemplary embodiment of the present disclosure. As shown in Figure 1, the uninterruptible power supply includes a pre-charge circuit 10, a rectification circuit 11, an inverter circuit 12, a mains relay RL3, a first bus capacitor C1, and a second bus capacitor C2.

A UPS front-stage distribution transformer may provide three-phase power lines U, V, W, and a neutral line N. In the uninterruptible power supply, the mains relay RL3 has a first port electrically connected to the three-phase power lines, and a second port electrically connected to an input terminal of the rectification circuit 11.

The mains relay RL3 includes three controllable relays. First ends of the three controllable relays constitute the first port of the mains relay RL3, that is, the first ends of the three controllable relays are electrically connected to phases of the three-phase power lines, respectively. Second ends of the three controllable relays constitute the second port of the mains relay RL3.

The rectification circuit 11 is provided with alternating-current input terminals. The alternating-current input terminals include three-phase input terminals, which are electrically connected to the second ends of the three controllable relays of the second port of the mains relay RL3 respectively.

The rectification circuit 11 includes a rectification unit. The rectification unit includes rectification devices D7, D8, D9, D10, D11 and D12, controllable switch devices Q25, Q26, Q27, Q28, Q29, and Q30, and inductors L7, L8, and L9. In the circuit structure shown in Figure 1, multiple rectification devices and multiple controllable switch devices in the rectification unit constitute a Vienna structure.

Second ends of the rectification devices D7, D8, and D9 are all electrically connected to a positive direct-current bus Bus+, and serve as a positive output terminal of the rectification circuit 11. First ends of the rectification devices D10, D11, and D12 are all electrically connected to a negative direct-current bus Bus-, and serve as a negative output terminal of the rectification circuit 11. The positive output terminal of the rectification circuit 11 is electrically connected to a first end of the first bus capacitor C1, and the negative output terminal of the rectification circuit 11 is electrically connected to a second end of the second bus capacitor C2. A second end of the first bus capacitor C1 is electrically connected to a first end of the second bus capacitor C2, and the two are electrically connected to the neutral line N.

A second end of the rectification device D10 is electrically connected to a first end of the D7 and a second end of the inductor L7. A second end of the rectification device D 11 is electrically connected to a first end of the D8 and a second end of the inductor L8. A second end of the rectification device D12 is electrically connected to a first end of the D9 and a second end of the inductor L9. First ends of the three inductors are coupled to second ends of the three controllable relays in the mains relay RL3, respectively.

In the circuit structure shown in Figure 1, the rectification device may be a diode or may be a transistor, such as MOSFET, IGBT, and other devices.

The pre-charge circuit 10 includes an uncontrollable three-phase bridge circuit, pre-charge relays RL1 and RL2, and current-limiting resistors R1 and R2. The uncontrollable three-phase bridge circuit includes diodes D1, D2, D3, D4, D5, and D6.

Cathodes of the diodes D1, D2, and D3 are electrically connected to each other, and are electrically connected to a first end of the filter capacitor C1 via the current-limiting resistor R1 and the pre-charge relay RL1, and serve as a positive output terminal of the pre-charge circuit 10. Anodes of the diodes D4, D5, and D6, are electrically connected to each other, and are electrically connected to a second end of the filter capacitor C2 via the current-limiting resistor R2 and the pre-charge relay RL2, and serves as a negative output terminal of the pre-charge circuit 10.

In some embodiments, the pre-charge circuit 10 further includes a filtering capacitor C3. The positive output terminal of the pre-charge circuit 10 is electrically connected to a first end of the filtering capacitor C3, and the negative output terminal of the pre-charge circuit 10 is electrically connected to a second end of the filtering capacitor C3.

The anode of the diode D1 and the cathode of the D4 are electrically connected to each other, and are electrically connected to a power line U. The anode of the diode D2 and the cathode of the D5 are electrically connected to each other, and are electrically connected to a power line V The anode of the diode D3 and the cathode of the D6 are electrically connected to each other, and are electrically connected to a power line W.

In the circuit structure shown in Figure 1, the positive output terminal of the pre-charge circuit 10 is electrically connected to the positive direct-current bus Bus+, and the negative output terminal of the pre-charge circuit 10 is electrically connected to the negative direct-current bus Bus-.

After the UPS having been started, the mains relay RL3 is disconnected, and the pre-charge relays RL1 and RL2 in the pre-charge circuit 10 are closed. Hence, the uncontrollable three-phase bridge circuit generates a rectified electrical signal based on the three-phase mains power, and provides a forward electrical signal to the first end of the first bus capacitor C1 via the current-limiting resistor R1, the pre-charge relay RL1, and the positive direct-current bus+, and provides a reverse electrical signal to the second end of the second bus capacitor C2 via the current-limiting resistor R2, the pre-charge relay RL2, and the negative direct-current Bus-.

As the pre-charge circuit 10 continues to charge the bus capacitor, a difference between a voltage of the first end of the first bus capacitor C 1 and a voltage of the neutral line N is continuously increased, and an absolute value of a difference between a voltage of the second end of the second bus capacitor C2 and the voltage of the neutral line N is continuously increased.

Thus, a difference between a forward peak voltage of the mains power and a voltage of the positive direct-current bus Bus+ is decreased, and an absolute value of a difference between a reverse peak voltage of the mains power and a voltage of the negative direct-current bus Bus- is decreased.

When the absolute values of the differences described above are all within a preset difference range, for example, when the difference between the forward peak voltage of the mains power and the voltage of the positive direct-current bus Bus+ is less than a preset difference threshold, and the absolute value of the difference between the reverse peak voltage of the mains power and the voltage of the negative direct-current bus Bus- is less than a preset difference threshold, the mains relay RL3 is closed to control the rectification circuit 11 to perform a rectification operation to charge the bus capacitor in cooperation with the pre-charge circuit 10.

Due to the voltage division of the current-limiting resistors R1 and R2 in the pre-charge circuit 10, an absolute value of the peak voltage of the mains power is always greater than an absolute value of the bus voltage. Again, since a voltage of the first end of the controllable relay is related to a mains voltage, and a voltage of the second end of the controllable relay is related to a bus voltage (without considering a voltage drop caused by a path or device, the voltage of the first end of the controllable relay is approximately equal to the mains voltage, and the voltage of the second end is approximately equal to the bus voltage), there is a large voltage difference between the voltages of the first end and the second end of the controllable relay.

Moreover, there is a forward current path between the mains power and the bus in the rectification circuit (for example, the diode D7 is located between the U-phase mains power and the first end of the first bus capacitor C1, and a current conduction sequence defined by the diode D7 is from the U-phase power end to the bus end). When controlling the controllable relay to be closed, a large inrush current is generated, resulting in arcing of relay contacts, thus increasing a failure rate of the mains relay, and reducing reliability of the uninterruptible power supply.

Therefore, how to improve the stability of the uninterruptible power supply during the power-on process becomes a focus in researches.

To solve the above problems, an uninterruptible power supply, a method and an apparatus for soft starting the uninterruptible power supply, and a controller are provided according to the present disclosure. In the uninterruptible power supply, an inverter circuit is provided with three-phase output terminals, and two output terminals of the pre-charge circuit are electrically connected to any two phases of the output terminals of the inverter circuit, rather than directly connected to a direct current bus. When the uninterruptible power supply charges a bus capacitor with the pre-charge circuit, the bus capacitor can be charged through an energy storage operation and a freewheeling operation of the inverter circuit, so that a voltage of the bus capacitor is greater than a peak value of a mains power. When the mains relay is powered on, a voltage of an end of the mains relay electrically connected to the mains power is lower than the voltage of the bus capacitor. Due to the limitation of a conduction direction of a rectification device in a rectification circuit, no inrush current occurs. Hence, arcing of relay contacts caused by the inrush current is reduced, and thereby a stability of the uninterruptible power supply during a power-on process is improved.

The technical solutions of the present disclosure are described below in detail in conjunction with specific embodiments. The following specific embodiments may be combined with each other, and the same or similar concepts or processes may not be repeated in some embodiments.

A structure of the uninterruptible power supply according to the present disclosure is explained first.

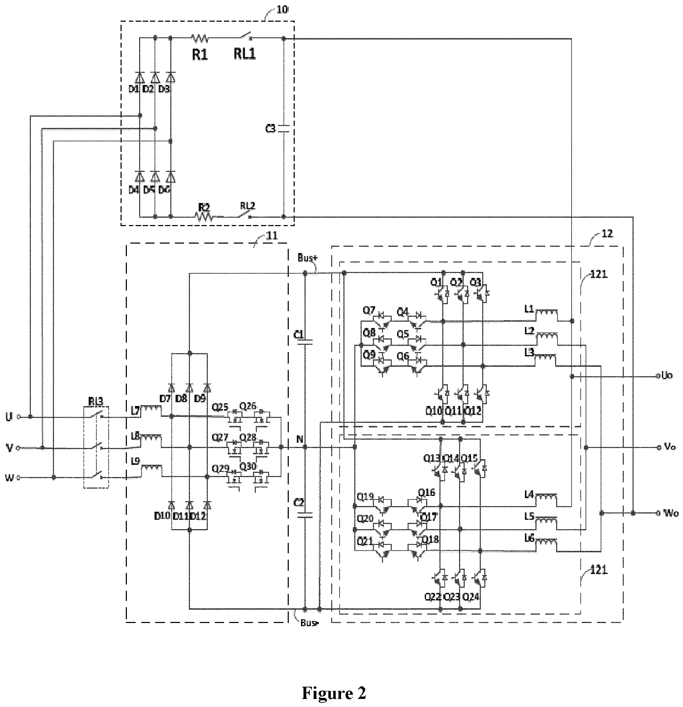

Figure 2 shows an uninterruptible power supply according to an exemplary embodiment of the present disclosure. As shown in Figure 2, the uninterruptible power supply includes a pre-charge circuit 10, a rectification circuit 11, an inverter circuit 12, a mains relay RL3, a first bus capacitor C1, and a second bus capacitor C2.

A UPS front-stage distribution transformer is provided in a front stage of the uninterruptible power supply. The UPS front-stage distribution transformer is electrically connected to alternating-current input terminals of the rectification circuit 11 through the mains relay RL3.

In some embodiments, three mains fuses are connected in series between the UPS front-stage distribution transformer and the mains relay RL3, to protect the power supply of each phase during usage.

In some embodiments, a structure of a rectification unit in the rectification circuit 11 is a Vienna structure as shown in Figure 2. The rectification unit includes six rectification modules, three energy storage modules, and three midpoint freewheeling modules. First ends of a first rectification module, a second rectification module, and a third rectification module are electrically connected to each other, serving as a positive output terminal of the rectification unit. Second ends of a fourth rectification module, a fifth rectification module, and a sixth rectification module are electrically connected to each other, and serve as a negative output terminal of the rectification unit. A second end of the first rectification module and a first end of the fourth rectification module are electrically connected to each other, and are electrically connected to a second end of a first energy storage module and a first end of a first midpoint freewheeling module. A second end of the second rectification module and a first end of the fifth rectification module are electrically connected to each other, and are electrically connected to a second end of a second energy storage module and a first end of a second midpoint freewheeling module. A second end of the third rectification module and a first end of the sixth rectification module are electrically connected to each other, and are electrically connected to a second end of a third energy storage module and a first end of a third midpoint freewheeling module. First ends of the three energy storage modules are electrically connected to second ends of three controllable relays in the mains relay RL3, respectively. Second ends of the three midpoint freewheeling modules are electrically connected to a neutral line.

In some embodiments, the rectification module includes a diode. An anode of the diode serves as a second end of the rectification module and a cathode of the diode serves as a first end of the rectification module. A schematic structural diagram of rectification modules constructed by using diodes D7, D8, D9, D10, D11, and D12 is shown in Figure 2.

In some embodiments, the rectification module includes a controllable switch device. The controllable switch device may be a controllable transistor such as a field-effect transistor or a transistor, or may be a controllable device such as a relay or a contactor. For example, the rectification module includes an N-type field-effect transistor, a source of a CMOS serves as a first end of the rectification module, and a drain of the CMOS serves as a second end of the rectification module.

In some embodiments, the rectification module may include a controllable switch device and a related device connected in parallel. The related device connected in parallel may be a diode. In a case where the related device connected in parallel is a diode, the diode is connected in inverse parallel with the controllable switch device. That is, a conduction direction of the controllable switch device is from the second end of the rectification module to the first end of the rectification module, and a conduction direction of the diode is from the first end of the rectification module to the second end of the rectification switch.

In some embodiments, the energy storage module includes an inductor. A first end of the inductor serves as a first end of the energy storage module and a second end of the inductor serves as a second end of the energy storage module. A schematic structural diagram of energy storage modules constructed by using inductors L7, L8, and L9 is shown in Figure 2.

In some embodiments, the midpoint freewheeling module is a controllable bidirectional conducted module. The midpoint freewheeling module includes at least two controllable switch devices, i.e., a first controllable switch device and a second controllable switch device. A first end of the first controllable switch device is electrically connected or coupled to a first end of the midpoint freewheeling module, and a second end of the first controllable switch device is electrically connected or coupled to a second end of the midpoint freewheeling module. A first end of the second controllable switch device is electrically connected or coupled to the second end of the midpoint freewheeling module, and a second end of the second controllable switch device is electrically connected or coupled to the first end of the midpoint freewheeling module. In a case that the midpoint freewheeling module is conducted in a direction from the first end to the second end of the midpoint freewheeling module, the first controllable switch device is turned on in the conduction direction. In a case that the midpoint freewheeling module is conducted in a direction from the second end to the first end of the midpoint freewheeling module, the second controllable switch device is turned on in the conduction direction.

In an embodiment as shown in Figure 2, the first midpoint freewheeling module includes controllable switch devices Q25 and Q26, the second midpoint freewheeling module includes controllable switch devices Q27 and Q28, and the third midpoint freewheeling module includes controllable switch devices Q29 and Q30. Within each midpoint freewheeling module, the two controllable switch devices are connected in inverse series. For example, the controllable switch device Q25 has a first end electrically connected to a second end of the inductor L7, and a second end electrically connected to a second end of the controllable switch device Q26. A first end of the controllable switch device Q26 is electrically connected to the neutral line N. Two controllable switch devices in the midpoint freewheeling module are configured to maintain a bidirectional conduction path between an input terminal of the rectification circuit and the neutral line N.

The controllable switch device includes a CMOS and a diode connected in inverse parallel with the CMOS. For example, the CMOS is an N-type CMOS, a drain of the CMOS is electrically connected to a cathode of the diode connected in inverse parallel, and a source of the CMOS is electrically connected to an anode of the diode connected in inverse parallel. For example, in the first midpoint freewheeling module in Figure 2, the CMOSs in the controllable switch devices Q25 and Q26 are connected to each other with a common source. When the midpoint freewheeling module is conducted in a direction from the second end to the first end of the midpoint freewheeling module, the CMOS in the controllable switch device Q26 is turned on, and the diode connected in inverse parallel in the controllable switch device Q25 is switched on. When the midpoint freewheeling module is conducted in a direction from the first end to the second end of the midpoint freewheeling module, the CMOS in the controllable switch device Q25 is turned on, and the diode connected in inverse parallel in the controllable switch device Q26 is switched on.

The midpoint freewheeling module further includes other internal structures, which are explained later in the structure of the inverter circuit.

In some other embodiments, the structure of the rectification module may be a dual boost circuit.

The inverter circuit 12 includes at least one inverter unit 121. The inverter unit 121 includes a three-phase three-level inverter circuit. The three-phase three-level inverter circuit includes three single-phase three-level inverter circuits. Each of the single-phase three-level inverter circuits includes a first switch module, a second switch module, a midpoint freewheeling module, and an energy storage module.

In a single-phase three-level inverter circuit, a first end of the first switch module is electrically connected to a positive input terminal of the inverter circuit, a second end of the second switch module is electrically connected to a negative input terminal of the inverter circuit, and a second end of the first switch module and a first end of the second switch module are electrically connected to the midpoint freewheeling module. A first end of the midpoint freewheeling module is electrically connected to an output terminal of a respective phase of the inverter unit via the energy storage module, and a second end of the midpoint freewheeling module is electrically connected to the neutral line.

In some embodiments, the three-level inverter circuit is a T-type three-level inverter circuit, in which a second end of the first switch module and a first end of the second switch module are electrically connected to a first end of the midpoint freewheeling module.

In a case where the inverter circuit operates for energy storage, a first conduction current path of the midpoint freewheeling module coupled to the positive output terminal of the pre-charge circuit is from the first end to the second end of the midpoint freewheeling module, and a first conduction current path of the midpoint freewheeling module coupled to the negative output terminal of the pre-charge circuit is from the second end to the first end of the midpoint freewheeling module.

In a case where the inverter circuit operates for freewheeling, all the midpoint freewheeling modules are turned off, and there is no conduction current path.

The midpoint freewheeling module includes a first controllable switch device and a second controllable switch device. A first end of the first controllable switch device serves as a first end of the midpoint freewheeling module, and a second end of the first controllable switch device is electrically connected to a second end of the second controllable switch device. A first end of the second controllable switch device serves as a second end of the midpoint freewheeling module.

A structure of the inverter circuit 12 constituted based on the T-type three-level inverter circuit may be as shown in Figure 2. The inverter circuit 12 includes two inverter units 121. A first inverter unit includes switch devices Q1, Q2, Q3, Q10, Q11, and Q12, controllable switch devices Q4, Q5, Q6, Q7, Q8, and Q9 and freewheeling inductors L1, L2, and L3. A second inverter unit includes switch devices Q13, Q14, Q15, Q22, Q23, and Q24, controllable switch devices Q16, Q17, Q18, Q19, Q20, and Q21 and freewheeling inductors L4, L5, and L6.

The structure of the T-type three-level inverter circuit is described based on for example the first inverter unit 121, that is, the inverter unit 121 on the upper side of Figure 2.

The first inverter unit 121 includes a U-phase three-level inverter circuit, a V-phase three-level inverter circuit, and a W-phase three-level inverter circuit. In the U-phase three-level inverter circuit, the first switch module includes a switch device Q1, the second switch module includes a switch device Q10, the energy storage module includes a freewheeling inductor L1, and the midpoint freewheeling module includes controllable switch devices Q7 and Q4.

The switch devices and the controllable switch devices include CMOSs. The U-phase three-level inverter circuit is described based on for example a N-type CMOS. The switch device Q1 includes an N-type CMOS. A drain of the CMOS serves as a first end of the first switch module and is electrically connected to the positive input terminal of the inverter circuit. A source of the CMOS serves as a second end of the first switch module and is electrically connected to a first end of the freewheeling inductor L 1. A second end of the freewheeling inductor L1 is electrically connected to a U-phase output terminal of the inverter circuit.

The switch device Q10 includes a N-type CMOS. A drain of the CMOS serves as a first end of the second switch module, and is electrically connected to the source of the CMOS in the switch device Q1. A source of the CMOS serves as a second end of the second switch module, and is electrically connected to the negative input terminal of the inverter circuit.

In some embodiments, in each switch device, the CMOS is connected in inverse parallel to a diode.

In the U-phase three-level inverter circuit, the midpoint freewheeling module includes a first controllable switch device Q4 and a second controllable switch device Q7. Each controllable switch device includes a CMOS and a diode connected in inverse parallel to the CMOS.

In a case that the CMOS is an N-type CMOS, a drain of the CMOS in the first controllable switch device Q4 serves as a first end of the midpoint freewheeling module, and a source of the CMOS is electrically connected to a source of the CMOS in the second controllable switch device Q7. A drain of the CMOS in the second controllable switch device Q7 serves as a second end of the midpoint freewheeling module and is electrically connected to the N line.

In a case that the conduction direction of the current in the midpoint freewheeling module is from the first end to the second end of the midpoint freewheeling module, the CMOS in the first controllable switch device Q4 is turned on, and the diode in the second controllable switch device Q7 is switched on. In a case that the conduction direction of the current in the midpoint freewheeling module is from the second end to the first end of the midpoint freewheeling module, the diode in the first controllable switch device Q4 is switched on, and the CMOS in the second controllable switch device Q7 is turned on.

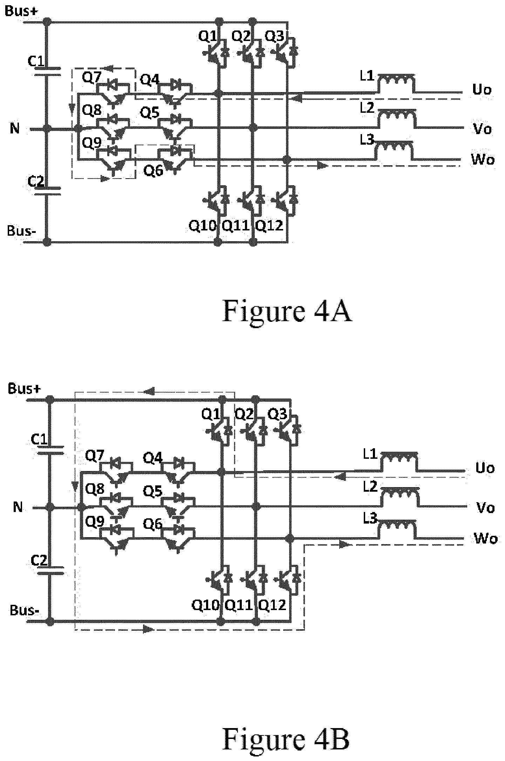

In some embodiments, in the structure shown in Figure 2, a conduction current path generated during the energy storage of the inverter unit is as shown in Figure 4A. A forward electrical signal is obtained at a Uo terminal of the inverter circuit electrically connected to the positive output terminal of the pre-charge circuit. The forward electrical signal sequentially passes through the freewheeling inductor L1, the CMOS in the controllable switch device Q4, the diode in the controllable switch device Q7, the N line, the CMOS in the controllable switch device Q9, the diode in the controllable switch device Q6, the freewheeling inductor L3, and a Wo terminal of the inverter circuit, to the negative output terminal of the pre-charge circuit.

The conduction current path generated during the freewheeling of the inverter unit is as shown in Figure 4B. The conduction current path passes through the Uo terminal of the inverter circuit, the freewheeling inductor L1, the diode in the switch device Q1, the first bus capacitor C1, the second bus capacitor C2, the diode in the switch device Q12, the freewheeling inductor L3, and the Wo terminal of the inverter circuit.

In some other embodiments, the CMOSs in the midpoint freewheeling modules may be connected to each other with a common drain, which can be implemented simply by interchanging the positions of the first controllable switch device Q4 and the second controllable switch device Q7 shown in Figure 2, or by replacing the CMOS in the controllable switch device with a P-type CMOS.

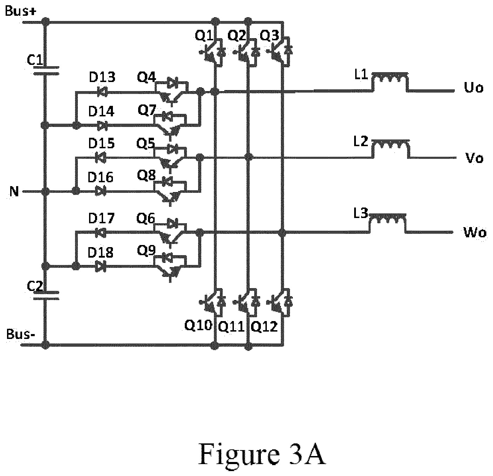

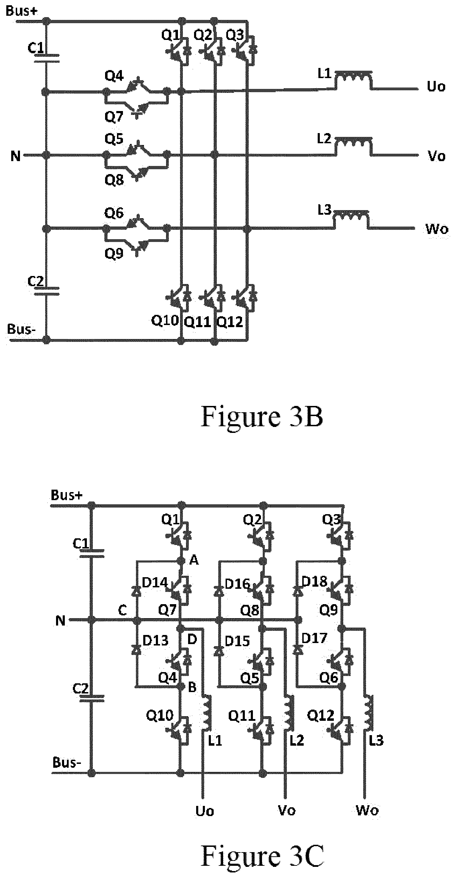

In some other embodiments, the first controllable switch device Q4 and the second controllable switch device Q7 in the midpoint freewheeling module may be electrically connected in parallel. In some cases, in order to limit a conduction direction of the current in a branch where the controllable switch device is located, each controllable switch device is connected in series with a diode. A conduction direction of the diode is consistent with the conduction direction of the CMOS in the controllable switch device. A schematic diagram of a circuit connection relationship is shown in Figure 3A. In some other cases, the controllable switch device includes only the CMOS, and the CMOSs in the two controllable switch devices are electrically connected in inverse parallel. That is, a source of the CMOS in the controllable switch device Q4 is electrically connected to a drain of the CMOS in the controllable switch device Q7, and a drain of the CMOS in the controllable switch device Q4 is electrically connected to a source of the CMOS in the controllable switch device Q7. A schematic diagram of such circuit connection relationship is shown in Figure 3B.

In some other embodiments, the three-level inverter circuit is an I-type three-level inverter circuit. A structure of the inverter unit 121 based on the I-type three-level inverter circuit may be as shown in Figure 3C. The inverter unit 121 includes a U-phase three-level inverter circuit, a V-phase three-level inverter circuit, and a W-phase three-level inverter circuit. In the U-phase three-level inverter circuit, the first switch module includes a switch device Q1, the second switch module includes a switch device Q10, the energy storage module includes a freewheeling inductor L1, and the midpoint freewheeling module includes the controllable switch devices Q7 and Q4, a first energy storage diode D13, and a second energy storage diode D14. Devices included in the other phases of the three-level inverter circuit are similar to the above and are not exhausted here.

The structure of the inverter circuit is described below based on for example the U-phase inverter circuit shown in Figure 3C.

A second end of the first switch module is electrically connected to a third end of the midpoint freewheeling module at a point A, and a first end of the second switch module is electrically connected to a fourth end of the midpoint freewheeling module at a point B. A first end of the midpoint freewheeling module is electrically connected to a first end of the freewheeling inductor L1 at a point D, and a second end of the midpoint freewheeling module is electrically connected to the N line at a point C.

In a case where the inverter circuit operates for energy storage, a first conduction current path of the midpoint freewheeling module coupled to the positive output terminal of the pre-charge circuit passes through the first end, the fourth end, and the second end of the midpoint freewheeling module, sequentially; and a first conduction current path of the midpoint freewheeling module coupled to the negative output terminal of the pre-charge circuit passes through the second end, the third end, and the first end of the midpoint freewheeling module, sequentially.

In a case where the inverter circuit operates for freewheeling, a second conduction current path of the midpoint freewheeling module coupled to the negative output terminal of the pre-charge circuit passes through the second end, the third end, and the first end of the midpoint freewheeling module, sequentially.

The midpoint freewheeling module includes a first controllable switch device, a second controllable switch device, a first energy storage diode, and a second energy storage diode. A first end of the first controllable switch device serves as the first end (the point D) of the midpoint freewheeling module. A second end of the first controllable switch device and a first end of the first energy storage diode are electrically connected to each other, serving as the fourth end (the point B) of the midpoint freewheeling module. A second end of the first energy storage diode and a first end of the second energy storage diode are electrically connected to each other, serving as the second end (the point C) of the midpoint freewheeling module. A first end of the second controllable switch device and a second end of the second energy storage diode are electrically connected to each other, serving as the third end (the point A) of the midpoint freewheeling module. A second end of the second controllable switch device is electrically connected to the first end of the first controllable switch device. Structures of the first switch module and the second switch module are the same as those of the switch modules in the embodiment of Figure 2, which is not repeated here.

In the midpoint freewheeling module, each of the controllable switch devices includes a CMOS and a diode connected in inverse parallel to the CMOS. In a case where the CMOS is an N-type CMOS, a drain of the CMOS in the controllable switch device Q4 serves as the first end of the midpoint freewheeling module and is electrically connected to a first end of the freewheeling inductor L1. A source of the CMOS in the controllable switch device Q4 and an anode of the first energy storage diode D13 are connected to each other, serving as the fourth end of the midpoint freewheeling module. The first energy storage diode D13 and an anode of the second energy storage diode D14 are connected to each other, serving as the second end of the midpoint freewheeling module. A cathode of the second energy storage diode D14 and a drain of the CMOS in the controllable switch device Q7 are connected to each other, serving as the third end of the midpoint freewheeling module. A source of the CMOS in the controllable switch device Q7 is electrically connected to the drain of the CMOS in the controllable switch device Q4.

A connection relationship of the other phases of the three-level inverter circuit is similar to that of the U-phase three-level inverter circuit, and is not described in detail here.

In the above circuit structure, the controllable switch device may be a controllable transistor such as a field-effect transistor and a transistor, or may be a controllable device such as a relay and a contactor.

When the pre-charge circuit 10 is connected to the inverter circuit 12, the two output terminals of the pre-charge circuit 10 are electrically connected to any two output terminals of the inverter circuit 12, respectively. In the connection relationship shown in Figure 2, the positive output terminal of the pre-charge circuit 10 is electrically connected to the U-phase output terminal of the inverter circuit 12, and the negative output terminal of the pre-charge circuit 10 is electrically connected to the W-phase output terminal of the inverter circuit 12.

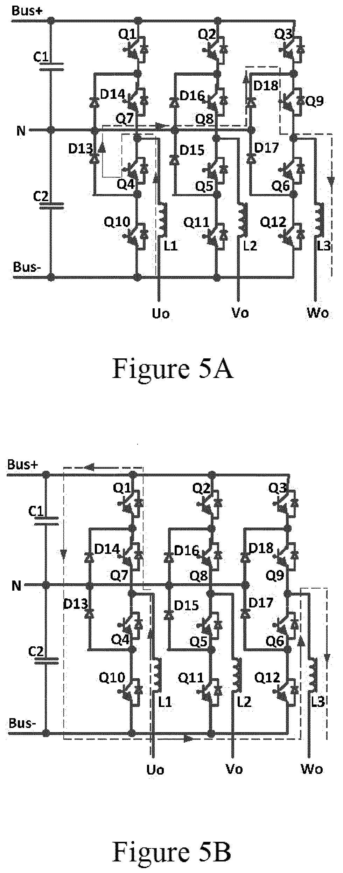

In this case, a conduction current path generated during the energy storage of the inverter circuit is as shown in Figure 5A. The conduction current path passes through the Uo terminal of the inverter circuit, the freewheeling inductor L1, the CMOS in the controllable switch device Q4, the first energy storage diode D13, the second energy storage diode D18, the CMOS in the controllable switch device Q9, the freewheeling inductor L3, and the Wo terminal of the inverter circuit.

A conduction current path generated during the freewheeling of the inverter circuit is as shown in Figure 5B. The conduction current path passes through the Uo terminal of the inverter circuit, the freewheeling inductor L1, the diode in the controllable switch device Q7, the diode in the switch device Q1, the first bus capacitor C1, the second bus capacitor C2, the diode in the switch device Q12, the diode in the controllable switch device Q6, the freewheeling inductor L3, and the Wo terminal of the inverter circuit.

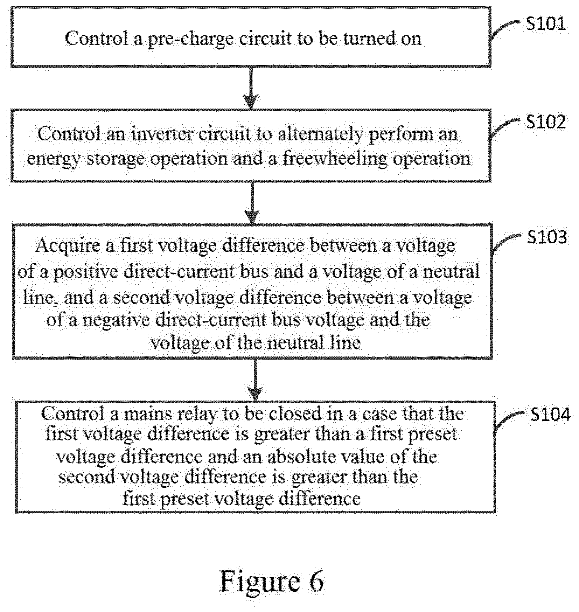

The operation of the uninterruptible power supply is explained below in conjunction with the circuit structure shown in Figure 2. Figure 6 shows a method for soft starting an uninterruptible power supply according to an exemplary embodiment of the present disclosure. As shown in Figure 6, the method includes S101 to S104.

In S101, the pre-charge circuit is controlled to be turned on.

After the uninterruptible power supply is started, the pre-charge relays RL1 and RL2 of the pre-charge circuit 10 are closed. In the three-phase (U, V, W) power supply, one phase of the power supply which is in a positive half-cycle operation transmits a forward electrical signal to a U-phase output terminal of the inverter circuit 12 through a positive bridge arm circuit of an uncontrollable three-phase bridge circuit, and one phase of the power which is in a negative half-cycle operation transmits a reverse electrical signal to a W-phase output terminal of the inverter circuit 12 through a negative bridge arm circuit of the uncontrollable three-phase bridge circuit.

In S102, the inverter circuit is controlled to alternately perform an energy storage operation and a freewheeling operation.

When the inverter circuit is controlled to perform the energy storage operation, a midpoint freewheeling module coupled to a positive output terminal of the pre-charge circuit 10 is controlled to turn on in a first direction. The first direction is a direction in which the current flows from the positive output terminal of the pre-charge circuit 10 to a neutral line.

The controllable switch unit coupled to a negative output terminal of the pre-charge circuit 10 is controlled to be turned on in a second direction. The second direction is a direction in which the current flows from the neutral line to the negative output terminal of the pre-charge circuit 10.

The other switch devices are controlled to be turned off.

In the T-type three-level circuit shown in Figure 2, for a first inverter unit, controllable switch devices Q4 and Q7 coupled to a U-phase output terminal Uo are controlled to be turned on, and controllable switch devices Q9 and Q6 coupled to a W-phase output terminal Wo are controlled to be turned on, thereby forming a loop passing through the mains power, the positive bridge arm circuit of the uncontrollable three-phase bridge circuit that is turned on in the pre-charge circuit 10, the current-limiting resistor R1, the pre-charge relay RL1, the freewheeling inductor L1, the CMOS in the controllable switch device Q4, the diode in the controllable switch device Q7, the neutral line N, the CMOS in the controllable switch device Q9, the diode in the controllable switch device Q6, the freewheeling inductor L3, the pre-charge relay RL2, the current-limiting resistor R2, the negative bridge arm circuit of the uncontrollable three-phase bridge circuit that is turned on in the pre-charge circuit 10, and the mains power.

In the T-type three-level circuit shown in Figure 3A, the controllable switch device Q4 coupled to the U-phase output terminal Uo is controlled to be turned on, and the controllable switch device Q9 coupled to the W-phase output terminal Wo is controlled to be turned on, thereby forming a loop passing through the mains power, the positive bridge arm circuit of the uncontrollable three-phase bridge circuit that is turned on in the pre-charge circuit 10, the current-limiting resistor R1, the pre-charge relay RL1, the freewheeling inductor L1, the CMOS in the controllable switch device Q4, the diode D13, the neutral line N, the diode D18, the CMOS in the controllable switch device Q9, the freewheeling inductor L3, the pre-charge relay RL2, the current-limiting resistor R2, the negative bridge arm circuit of the uncontrollable three-phase bridge circuit that is turned on in the pre-charge circuit 10, and the mains power.

In the T-type three-level circuit shown in Figure 3B, the controllable switch device Q4 coupled to the U-phase output terminal Uo is controlled to be turned on, and the controllable switch device Q9 coupled to the W-phase output terminal Wo is controlled to be turned on, thereby forming a loop passing through the mains power, the positive bridge arm circuit of the uncontrollable three-phase bridge circuit that is turned on in the pre-charge circuit 10, the current-limiting resistor R1, the pre-charge relay RL1, the freewheeling inductor L1, the CMOS in the controllable switch device Q4, the neutral line N, the CMOS in the controllable switch device Q9, the freewheeling inductor L3, the pre-charge relay RL2, the current-limiting resistor R2, the negative bridge arm of the uncontrollable three-phase bridge circuit that is turned on in the pre-charge circuit 10, and the mains power.

In the I-type three-level circuit shown in Figure 3C, the controllable switch device Q4 coupled to the U-phase output terminal Uo is controlled to be turned on, and the controllable switch device Q9 coupled to the W-phase output terminal Wo is controlled to be turned on, thereby forming a loop passing through the mains power, the positive bridge arm circuit of the uncontrollable three-phase bridge circuit that is turned on in the pre-charge circuit 10, the current-limiting resistor R1, the pre-charge relay RL1, the freewheeling inductor L1, the CMOS in the controllable switch device Q4, the first energy storage diode D13, the neutral line N, the second energy storage diode D18, the CMOS in the controllable switch device Q9, the freewheeling inductor L3, the pre-charge relay RL2, the current-limiting resistor R2, the negative bridge arm circuit of the uncontrollable three-phase bridge circuit that is turned on in the pre-charge circuit 10, and the mains power.

The switch devices at corresponding positions of other inverter units are also turned on to generate similar energy storage loops, which are not described in detail here.

When the inverter circuit is controlled to perform the freewheeling operation, all switch devices in the inverter circuit are controlled to be turned off.

Referring to the T-type three-level circuits shown in Figure 2, Figure 3A, and Figure 3B, a freewheeling loop formed for the first inverter unit includes:
the mains power, the positive bridge arm circuit of the uncontrollable three-phase bridge circuit that is turned on in the pre-charge circuit 10, the current-limiting resistor R1, the pre-charge relay RL1, the freewheeling inductor L1, the diode in the switch device Q1, the first bus capacitor C1, the second bus capacitor C2, the diode in the switch device Q12, the freewheeling inductor L3, the pre-charge relay RL2, the current-limiting resistor R2, the negative bridge arm circuit of the uncontrollable three-phase bridge circuit that is turned on in the pre-charge circuit 10, and the mains power.

Referring to the I-type three-level circuit shown in Figure 3C, a freewheeling loop includes:
the mains power, the positive bridge arm circuit of the uncontrollable three-phase bridge circuit that is turned on in the pre-charge circuit 10, the current-limiting resistor R1, the pre-charge relay RL1, the freewheeling inductor L1, the diode in the switch device Q7, the diode in the switch device Q1, the first bus capacitor C1, the second bus capacitor C2, the diode in the switch device Q12, the diode in the switch device Q6, the freewheeling inductor L3, the pre-charge relay RL2, the current-limiting resistor R2, the negative bridge arm circuit of the uncontrollable three-phase bridge circuit that is turned on in the pre-charge circuit 10, and the mains power.

During the energy storage operation, a direction of a freewheeling current generated by the freewheeling inductor L 1 is from the U-phase output terminal Uo to the neutral line N, and a direction of a freewheeling current generated by the freewheeling inductor L3 is from the neutral line N to the W-phase output terminal Wo. Therefore, during the freewheeling process, a voltage of a first end of the first bus capacitor C1 is increased based on the energy stored in the freewheeling inductor L1 and the electric energy from the forward electrical signal of the mains power, while a voltage of the second end of the second bus capacitor C2 is decreased based on the energy stored in the freewheeling inductor L3 and the electric energy from the reverse electrical signal of the mains power.

After multiple cycles of the energy storage operation and the freewheeling operation, an absolute value of a difference between the bus voltage and a voltage of the neutral line N is greater than an absolute value of a difference between a peak voltage of the mains power and a voltage of the neutral line.

In Step 103, a first voltage difference between a voltage of a positive direct-current bus and a voltage of the neutral line, and a second voltage difference between a voltage of a negative direct-current bus and a voltage of the neutral line are acquired.

During the process of charging the bus capacitor, the first voltage difference between a voltage of a positive direct-current bus Bus+ and a voltage of the neutral line N and the second voltage difference between a voltage of the negative direct-current bus Bus- and a voltage of the neutral line N are sampled at a preset time interval.

In S104, the mains relay is controlled to be closed, when the first voltage difference is greater than a first preset voltage difference and an absolute value of the second voltage difference is greater than the first preset voltage difference.

The first preset voltage difference is greater than or equal to an absolute value of a difference between a peak voltage of the mains power and a voltage of the neutral line.

In some embodiments, when the first preset voltage difference is equal to the absolute value of the difference between the peak voltage of the mains power and the voltage of the neutral line, the uninterruptible power supply may control the mains relay to be closed after the absolute value of the bus capacitor voltage exceeds the absolute value of the peak voltage of the mains power.

In some other embodiments, when the first preset voltage difference is greater than the absolute value of the difference between the peak voltage of the mains power and the voltage of the neutral line, the uninterruptible power supply may control the mains relay to be closed in a case that the absolute value of the bus capacitor voltage exceeds the absolute value of the peak voltage of the mains power by a preset voltage value. The preset voltage value is equal to a difference between the first preset voltage difference and a voltage difference between the peak voltage of the mains power and the voltage of the neutral line.

After the mains relay is closed, the uninterruptible power supply can charge the bus capacitor with a rectification current.

In a case that the mains relay RL3 is closed and either phase of a mains signal is in a positive half-cycle operation, the midpoint freewheeling module corresponding to the phase in the rectification circuit 11 is turned on in a direction from the first end to the second end of the midpoint freewheeling module to store energy in the energy storage inductor corresponding to the phase. Then, the midpoint freewheeling module is turned off to charge the first bus capacitor C1 with the phase of the mains power and the electric energy stored in the energy storage inductor. When the phase of the mains signal is in a negative half-cycle operation, the midpoint freewheeling module corresponding to the phase is turned on in a direction from the second end to the first end of midpoint freewheeling module, to store energy in the energy storage inductor corresponding to the phase. Then, the midpoint freewheeling module is turned off to discharge the second bus capacitor C2 with the phase of the mains power and the electric energy stored in the energy storage inductor.

For example, in a case that the U-phase mains power is in the positive half cycle operation, the controllable switch device Q25 is turned on, so that a conduction loop is formed by the U-phase power supply, the mains relay RL3, the energy storage inductor L7, the CMOS in the controllable switch device Q25, the diode in the controllable switch device Q26, and the neutral line N, to charge the energy storage inductor L7. A direction of a charge current of the energy storage inductor L7 is from left to right. After the energy storage having been completed, the CMOS in the controllable switch device Q25 is turned off, so that a conduction loop is formed by the U-phase power supply, the mains relay RL3, the energy storage inductor L7, the diode D7, the first bus capacitor C1, and the neutral line N. The U-phase power supply and the energy storage inductor L7 charge the first end of the first bus capacitor C1, so that the voltage of the first end of the first bus capacitor C1 is increased.

In a case that the U-phase mains power is in the negative half cycle operation, the controllable switch device Q26 is turned on, so that a conduction loop is formed by the neutral line N, the CMOS in the controllable switch device Q26, the diode in the controllable switch device Q25, the energy storage inductor L7, the mains relay RL3, and the U-phase power supply, to charge the energy storage inductor L7. A direction of charge current of the energy storage inductor L7 is from right to left. After the energy storage having been completed, the CMOS in the controllable switch device Q26 is turned off, so that a conduction loop is formed by the neutral line N, the diode D 10, the energy storage inductor L7, the mains relay RL3, and the U-phase power supply, to continuously discharge the second bus capacitor C2, so that the voltage of the second end of the second bus capacitor C2 is decreased.

Operation of the other phases is similar to the above and is not described here.

After the mains relay is closed, the pre-charge circuit is controlled to be turned off.

In the above technical solutions, in the uninterruptible power supply, the two output terminals of the pre-charge circuit are electrically connected to any two phases of the output terminal of the inverter circuit, respectively, rather than directly connected to the direct current bus. When the uninterruptible power supply charges the bus capacitor with the pre-charge circuit, the bus capacitor may be charged through the energy storage operation and the freewheeling operation of the inverter circuit, so that the voltage of the bus capacitor is greater than the peak value of the mains power. When the mains relay is powered on, the voltage of the end of the mains relay that is electrically connected to the mains power is lower than the voltage of the bus capacitor. Due to the limitation of the conduction direction of the rectification device in the rectification circuit, no inrush current occurs. Hence, arcing of relay contacts caused by the inrush current is reduced, and the stability of the uninterruptible power supply during the power-on process is improved. Moreover, due to the energy storage operation of the inverter circuit, a charging time of the bus capacitor is shortened, so that the bus voltage in the uninterruptible power supply can reach a target threshold as soon as possible.

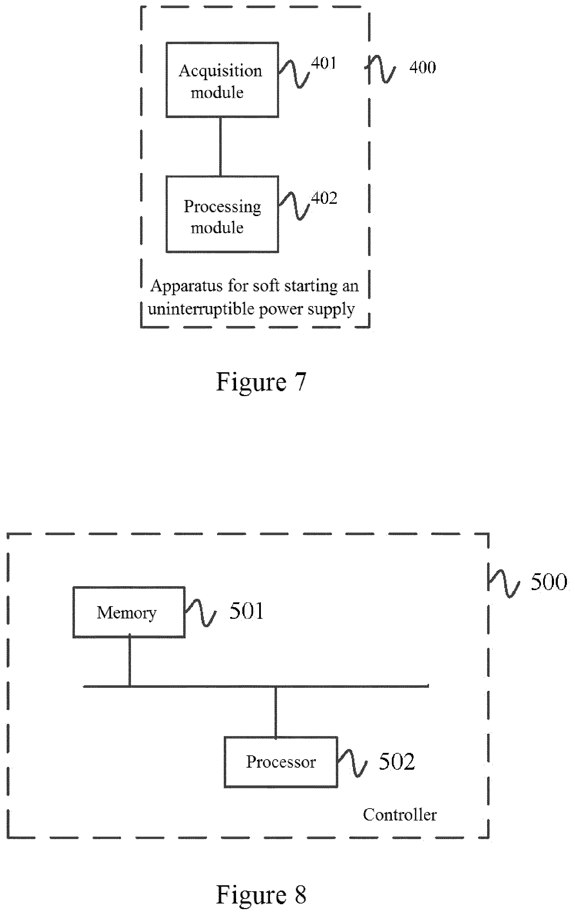

Figure 7 is a schematic structural diagram of an apparatus for soft starting an uninterruptible power supply according to an embodiment of the present disclosure. An apparatus 400 for soft starting an uninterruptible power supply includes an acquisition module 401 and a processing module 402.

The processing module 402 is configured to control the pre-charge circuit to be turned on, and control the inverter circuit to alternately perform an energy storage operation and a freewheeling operation.

The acquisition module 401 is configured to acquire a first voltage difference between a voltage of a positive direct-current bus and a voltage of a neutral line, and a second voltage difference between a voltage of a negative direct-current bus and a voltage a neutral line.

The processing module 402 is further configured to control the mains relay to be closed when the first voltage difference is greater than a first preset voltage difference and an absolute value of the second voltage difference is greater than the first preset voltage difference.

The first preset voltage difference is greater than or equal to an absolute value of a difference between a peak voltage of the mains power and the voltage of the neutral line.

In some feasible embodiments, the processing module 402 is specifically configured to:
control the first controllable switch device and the second controllable switch device to be turned on; and
control the other switch devices in the inverter circuit to be turned off.

The inverter circuit includes at least one inverter unit, and the inverter unit includes three single-phase three-level inverter circuits. The single-phase three-level inverter circuit includes a first switch module, a second switch module, and a midpoint freewheeling module. A second end of the first switch module, a first end of the second switch module, and a first end of the midpoint freewheeling module are electrically connected to phases of an output terminal of the inverter unit, respectively. A second end of the inverter circuit is electrically connected to the neutral line.

The midpoint freewheeling module includes a first controllable switch device and a second controllable switch device. The first controllable switch device is in a first conduction current path of the midpoint freewheeling module coupled to a positive output terminal of the pre-charge circuit, and the second controllable switch device is in a first conduction current path of the midpoint freewheeling module coupled to the negative output terminal of the pre-charge circuit. The first conduction current path of the midpoint freewheeling module coupled to the positive output terminal of the pre-charge circuit is from the first end to the second end of the midpoint freewheeling module. The first conduction current path of the midpoint freewheeling module coupled to the negative output terminal of the pre-charge circuit is from the second end to the first end of the midpoint freewheeling module.

In some feasible embodiments, the processing module 402 is specifically configured to:
control all switch devices in the inverter circuit to be turned off.

In some feasible embodiments, the processing module 402 is further configured to:
Control the pre-charge circuit to be turned off.

Figure 8 is a schematic structural diagram of a controller according to an embodiment of the present disclosure. The controller 500 includes a memory 501 and a processor 502. The memory 501 is configured to store computer instructions executable by the processor. The memory 501 may include a high-speed random access memory (RAM), and may further include a non-volatile memory (NVM), such as at least one disk storage, and may be a USB flash drive, a portable hard drive, a read-only memory, a disk, an optical disk, or the like.

The processor 502, when executing the computer instructions, implements the steps in the method for soft starting an uninterruptible power supply with the controller as an executing body in the above embodiments. For specific details, reference may be made to the relevant descriptions in the method embodiment described above. The processor 502 may be a Central Processing Unit (CPU), or may be another general-purpose processor, a Digital Signal Processor (DSP), an Application Specific Integrated Circuit (ASIC), or the like. The general-purpose processor may be a microprocessor, or may be a conventional processor, or the like. The steps of the method according to the embodiments of the present disclosure may be directly implemented by a hardware processor, or implemented by a combination of hardware and software modules in the processor.

The above-mentioned memory 501 may be stand-alone or integrated with the processor 502. When the memory 501 is stand-alone, the controller 500 further includes a bus for connecting the memory 501 and the processor 502. The bus may be an Industry Standard Architecture (ISA) bus, a Peripheral Component Interconnect (PCI) bus, or an Extended Industry Standard Architecture (EISA) bus. The bus may include an address bus, a data bus, a control bus, and the like. For ease of representation, the bus in the accompanying drawings of the present disclosure is not limited to only one bus or one type of bus.

A computer-readable storage medium is further provided according to the embodiment of present disclosure. The computer-readable storage medium stores computer instructions that, when executed by a processor, perform steps of the method for soft starting an uninterruptible power supply according to the above embodiments.

A computer program product is further provided according to the embodiment of present disclosure. The computer program product includes computer instructions that, when executed by a processor, perform steps of the method for soft starting an uninterruptible power supply according to the above embodiments.

Other embodiments of the present disclosure will be apparent to a person skilled in the art from consideration of the specification and practice of the disclosure here. The present disclosure is intended to cover any variation, use, or adaptive change of the present disclosure. These variations, uses, or adaptive changes follow the general principles of the present disclosure and include common general knowledge or common technical means in the art that are not disclosed in the present disclosure. The specification and the embodiments are considered as merely exemplary, and the scope and spirit of the present disclosure are pointed out in the claims.

It is to be understood that the present application is not limited to the precise structures described above and shown in the accompanying drawings, and various modifications and changes can be made without departing from the scope of the present disclosure. The scope of the present disclosure is limited by the appended claims only.

## Claims

1. An uninterruptible power supply, comprising a rectification circuit, a pre-charge circuit, an inverter circuit, a first bus capacitor, a second bus capacitor, and a mains relay, wherein
three-phase mains input terminals of the rectification circuit are electrically connected to three input terminals of the pre-charge circuit through the mains relay, respectively, a positive output terminal of the rectification circuit is electrically connected to a positive input terminal of the inverter circuit through a positive direct-current bus, and a negative output terminal of the rectification circuit is electrically connected to a negative input terminal of the inverter circuit through a negative direct-current bus, the first bus capacitor and the second bus capacitor are electrically connected in series between the positive direct-current bus and the negative direct-current bus, and a connection point between the first bus capacitor and the second bus capacitor is electrically connected to a neutral line; and
the inverter circuit is provided with three-phase output terminals, and a positive output terminal and a negative output terminal of the pre-charge circuit are electrically connected to any two-phase output terminals of the three-phase output terminals of the inverter circuit, respectively.

2. The uninterruptible power supply according to claim 1, wherein the inverter circuit comprises at least one inverter unit, each inverter unit comprises a three-phase three-level inverter circuit, the three-phase three-level inverter circuit comprises three single-phase three-level inverter circuits, each of the single-phase three-level inverter circuits comprises a first switch module, a second switch module, a midpoint freewheeling module, and an energy storage module; and
in the single-phase three-level inverter circuit, a first end of the first switch module is electrically connected to the positive input terminal of the inverter circuit, a second end of the second switch module is electrically connected to the negative input terminal of the inverter circuit, a second end of the first switch module and a first end of the second switch module are electrically connected to the midpoint freewheeling module, a first end of the midpoint freewheeling module is electrically connected to an output terminal of a respective phase of the inverter unit through the energy storage module, and a second end of the midpoint freewheeling module is electrically connected to the neutral line.

3. The uninterruptible power supply according to claim 2, wherein the three-level inverter circuit is a T-type three-level inverter circuit, and the second end of the first switch module and the first end of the second switch module are electrically connected to the first end of the midpoint freewheeling module;
in a case where the inverter circuit operates for energy storage, a conduction current path of the midpoint freewheeling module coupled to the positive output terminal of the pre-charge circuit is a path from the first end to the second end of the midpoint freewheeling module, and a conduction current path of the midpoint freewheeling module coupled to the negative output terminal of the pre-charge circuit is a path from the second end to the first end of the midpoint freewheeling module; and
in a case where the inverter circuit operates for freewheeling, the midpoint freewheeling modules are turned off.

4. The uninterruptible power supply according to claim 3, wherein the midpoint freewheeling module comprises a first controllable switch device and a second controllable switch device;
a first end of the first controllable switch device serves as the first end of the midpoint freewheeling module;
a second end of the first controllable switch device is electrically connected to a second end of the second controllable switch device; and
a first end of the second controllable switch device serves as the second end of the midpoint freewheeling module.

5. The uninterruptible power supply according to claim 2, wherein the three-level inverter circuit is an I-type three-level inverter circuit, the second end of the first switch module is electrically connected to a third end of the midpoint freewheeling module, and the first end of the second switch module is electrically connected to a fourth end of the midpoint freewheeling module;
in a case where the inverter circuit operates for energy storage, a conduction current path of the midpoint freewheeling module coupled to the positive output terminal of the pre-charge circuit is a path from the first end to the second end via the fourth end of the midpoint freewheeling module; and a conduction current path of the midpoint freewheeling module coupled to the negative output terminal of the pre-charge circuit is a path from the second end to the first end via the third end of the midpoint freewheeling module; and
in a case where the inverter circuit operates for freewheeling, a conduction current path of the midpoint freewheeling module coupled to the positive output terminal of the pre-charge circuit is a path from the first end to the third end of the midpoint freewheeling module, and a conduction current path of the midpoint freewheeling module coupled to the negative output terminal of the pre-charge circuit is a path from the fourth end to the first end of the midpoint freewheeling module.

6. The uninterruptible power supply according to claim 5, wherein the midpoint freewheeling module comprises a first controllable switch device, a second controllable switch device, a first energy storage diode, and a second energy storage diode;
a first end of the first controllable switch device and a second end of the second controllable switch device are electrically connected to each other, serving as the first end of the midpoint freewheeling module;
a second end of the first controllable switch device and a first end of the first energy storage diode are electrically connected to each other, serving as the fourth end of the midpoint freewheeling module;
a second end of the first energy storage diode and a first end of the second energy storage diode are electrically connected to each other, serving as the second end of the midpoint freewheeling module; and
a first end of the second controllable switch device and a second end of the second energy storage diode are electrically connected to each other, serving as the third end of the midpoint freewheeling module.

7. A method for soft starting an uninterruptible power supply, wherein the method is applied to the uninterruptible power supply according to any one of claims 1 to 6, and the method comprises:
controlling the pre-charge circuit to be turned on ;
controlling the inverter circuit to alternately perform an energy storage operation and a freewheeling operation;
acquiring a first voltage difference between a voltage of the positive direct-current bus and a voltage of the neutral line, and a second voltage difference between a voltage of the negative direct-current bus and the voltage of the neutral line; and
controlling the mains relay to be closed in a case that the first voltage difference is greater than a first preset voltage difference and an absolute value of the second voltage difference is greater than the first preset voltage difference,
wherein the first preset voltage difference is greater than or equal to an absolute value of a difference between a peak voltage of a mains power and the voltage of the neutral line.

8. The method according to claim 7, wherein the inverter circuit comprises at least one inverter unit, each inverter unit comprising three single-phase three-level inverter circuits, each of the single-phase three-level inverter circuits comprising a first switch module, a second switch module, a midpoint freewheeling module, and an energy storage module, and a second end of the first switch module, a first end of the second switch module and a first end of the midpoint freewheeling module are electrically connected to an output terminal of a respective phase of the inverter unit through the energy storage module, and a second end of the midpoint freewheeling module is electrically connected to the neutral line;
the midpoint freewheeling module comprises a first controllable switch device and a second controllable switch device, the first controllable switch device is in a conduction current path of the midpoint freewheeling module coupled to the positive output terminal of the pre-charge circuit, and the second controllable switch device is in a conduction current path of the midpoint freewheeling module coupled to the negative output terminal of the pre-charge circuit; the conduction current path of the midpoint freewheeling module coupled to the positive output terminal of the pre-charge circuit is a path from the first end to the second end of the midpoint freewheeling module, and the conduction current path of the midpoint freewheeling module coupled to the negative output terminal of the pre-charge circuit is a path from the second end to the first end of the midpoint freewheeling module; and
the controlling the inverter circuit to perform the energy storage operation comprises:
controlling the first controllable switch device and the second controllable switch device to be turned on; and
controlling the other switch devices in the inverter circuit to be turned off.

9. The method according to claim 8, wherein the controlling the inverter circuit to perform the freewheeling operation comprises:
controlling all switch devices in the inverter circuit to be turned off.

10. The method according to any one of claims 7 to 9, wherein after the controlling the mains relay to be closed, the method further comprises:
controlling the pre-charge circuit to be turned off.

11. An apparatus for soft starting an uninterruptible power supply, comprising:
a processing module configured to control a pre-charge circuit to be turned on and control an inverter circuit to alternately perform an energy storage operation and a freewheeling operation; and
an acquisition module configured to acquire a first voltage difference between a voltage of a positive direct-current bus and a voltage of a neutral line, and a second voltage difference between a voltage of a negative direct-current bus voltage and the voltage of the neutral line,
wherein the processing module is further configured to control a mains relay to be closed in a case that the first voltage difference is greater than a first preset voltage difference and an absolute value of the second voltage difference is greater than the first preset voltage difference, and
wherein the first preset voltage difference is greater than or equal to an absolute value of a difference between a peak voltage of a mains power and the voltage of the neutral line.

12. A controller comprising a processor and a memory communicatively coupled to the processor, wherein
the memory stores computer executable instructions, and
the processor, when executing the computer executable instructions, performs the method according to any one of claims 7 to 10.
